# EUROPEAN PATENT SPECIFICATION

(11) **EP 2 012 089 B1**
(45) Date of publication and mention of the grant of the patent: **04.09.2013**
(21) Application number: 07013022.4
(22) Date of filing: 03.07.2007
(51) Int. Cl.: G01C 21/36, B60K 35/00, G08G 1/0962, G09G 5/00

(54) **On-Vehicle display system**
Bordanzeigesystem für Fahrzeuge
Système d'affichage dans véhicule

(43) Date of publication of application: 07.01.2009
(73) Proprietor: Alpine Electronics, Inc., Tokyo (JP)
(72) Inventor: Galos, Andreas, 70567 Stuttgart (DE)
(74) Representative: Klunker . Schmitt-Nilson . Hirsch

(56) References cited:
- EP-A- 0 771 686
- DE-A1- 10 039 687
- US-A1- 2002 032 524
- US-B1- 6 654 024

## Description

### Background of the Invention

### Field of the Invention

The present invention is directed to an on-vehicle display system, which may be particularly installed in a car environment, for example in the vicinity of a driver's seat. The present invention is also directed to an on-vehicle navigation device comprising an on-vehicle display system according to the invention.

### Description of the Related Art

On-vehicle navigation devices are available in many different configurations. For example, a typical automobile navigation device may include a head unit comprising a display system which is placed in front of or in the vicinity of a driver's seat, for example in the mid console of the interior car environment. Such display system commonly includes a display device including a display screen which may be used, for instance, in connection with a vehicle navigation system, i.e. a backend of a navigation device, for displaying a map image.

A plurality of different images are displayed on the screen over time when the navigation device is in operation. This is primarily due to the changing position of the vehicle for different instants of time. It is an innate property of a navigation device, as it is well known in the prior art, that, for example, a portion of the map which is to be displayed may be adjusted according to a position change of the vehicle. Additional information to be displayed, such as points of interest, maneuver guidance, etc., may be adjusted over time as well.

Displaying a plurality of images results in discontinuities in the screen output, when one image is substituted by a subsequent image. As the display screen is typically in the field of view of a driver of the vehicle, his attention is often drawn to the event of a change in screen output. The image change on the display screen of the navigation device may therefore distract the driver from his primary task of handling the vehicle. The subconscious tribute to the change in the field of view, biologically referred to as gaze reflex, often makes it impossible for the driver to control his reaction to the distraction imposed by a change in screen output. This is also shown in US 6 654 024.

### Summary of the Invention

It is therefore an object of the present invention to provide an on-vehicle display system that may contribute to improving handling safety of the vehicle, particularly driving safety in the case of an automobile.

The invention is directed to an on-vehicle display system according to the features of claim 1. Further, the invention is directed to an on-vehicle navigation device including an on-vehicle display system according to the features of claim 13.

According to the invention, an on-vehicle display system comprises a display device adapted to display at least one image, a display data processing unit adapted to process data to be displayed on said display device and to provide corresponding output data, an image generation unit adapted to generate image data from said output data provided by said display data processing unit and to provide said image data to said display device for displaying an image, and a priority determination unit adapted to assign one of at least two priorities to said output data from said display data processing unit and to provide an output signal to said image generation unit indicative of said assigned priority. Said image generation unit is adapted to generate first image data for being displayed in a first image on said display device, as a response to first output data from said display data processing unit, and second image data for being displayed in a second image on said display device, as a response to succeeding second output data from said display data processing unit, including a transition process for generating said second image data succeeding said first image data. Said transition process is set to have a defined transition time period, said transition time period being determined by said image generation unit responsive to said output signal from said priority determination unit. Varying transition time periods in combination with a transition process between displaying succeeding images on a screen results in varying responsiveness of the user's gaze reflex. This allows for a reduction in user's distraction, for example when displaying images of a low priority having a relatively long transition time period not triggering the user's gaze reflex.

According to an embodiment of the invention, the transition time period for a higher priority is shorter than the transition time period for a lower priority. As a longer transition time period in combination with a transition process between displaying succeeding images on a screen leads to a lower responsivness of the gaze reflex, the user distraction is on the one hand decreased for display data which has a lower priority assigned to it. On the other hand it is ensured that the user's attention is drawn to the screen output for display data which has a higher priority assigned to it, since the user's gaze reflex is more likely to be triggered by a short transition time period.

According to another embodiment of the invention, said transition process comprises at least two succeeding image states with a first image state comprising said first image data and a last image state comprising said second image data, wherein said transition time period is the time period between a last instant that said first image state is provided to said display device and a first instant that said last image state is provided to said display device.

According to a further embodiment of the invention, at least one intermediate image state of said transition process between said first image state and said last image state is generated by said image generation unit, as a response to said output signal from said priority determination unit being indicative of a low priority, with one of said image states of said transition process and a subsequent one of said image states being more similar to each other than said first image state and said last image state to each other. For a low priority the user perceives no abrupt change in the screen output, since the image transition is split up into several sub-transitions. Every sub-transition is less abrupt in the user perception than an instant change from said first image to said second image. Therefore the gaze reflex of the user is not triggered by said sub-transitions.

The above described soft transition from one image to a succeeding image can be realised in different ways, resulting in several embodiments of generating the transition process.

According to a first embodiment of the invention, said image generation unit generates for said transition process image data derived from said first image data being superimposed with said second image data, with a transparency level of said first image data increasing and a transparency level of said second image data decreasing successively in said transition process. Said transparency level of said first image data may have a value of 0 in the beginning of said transition process and a value of 1 at the end of said transition process and said transparency level of said second image data may have a value of 1 in the beginning of said transition process and a value of 0 at the end of said transition process. This transition process is hereinafter referred to as cross-fading.

According to a second embodiment of the invention, intermediate image data is generated by said image generation unit for said transition process, such that the features of said first image morph into the features of said second image in the transition process. This transition process is hereinafter referred to as morphing shapes. It is perceived by the user as the structure of said first image growing into the structure of said second image, since every intermediate image state comprises features that are not part of said first image nor said second image, but every intermediate image state has greater similarity to said first image as well as to said second image than said first image and said second image have to each other.

Further advantageous features and embodiments of the invention are evident from the dependent claims.

### Brief Description of the Drawings

The invention will now be explained in view of the accompanying drawings for illustrating various embodiments of the invention.
Figure 1 is a schematic diagram illustrating an embodiment of an exemplary on-vehicle navigation device including a display system according to the present invention;
Figure 2 shows exemplary screen outputs for maneuver guidance provided over time to the user by the display system according to the invention in a case of high priority (Fig. 2a) and in case of low priority (Figs. 2b, 2c);
Figure 3 shows exemplary screen outputs for a split screen opening provided over time to the user by the display system according to the invention in a case of high priority (Fig. 3a) and in case of low priority (Figs. 3b, 3c).

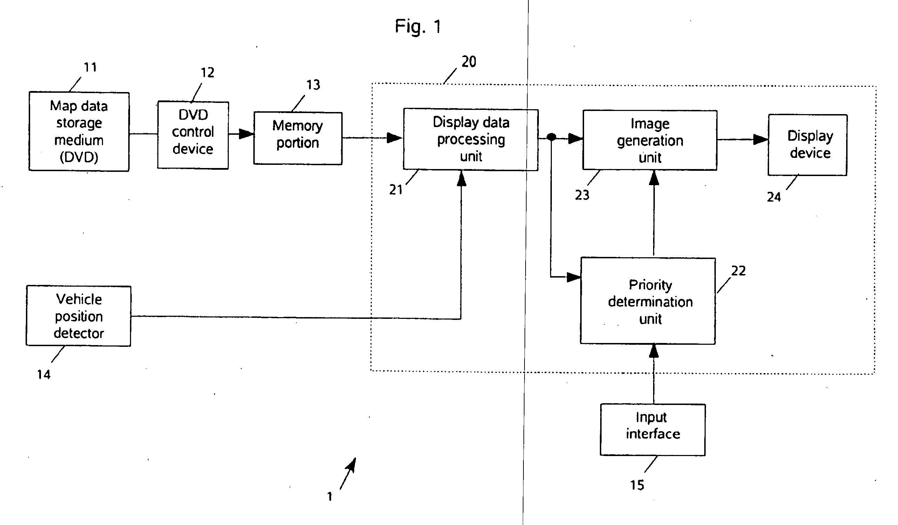

Figure 1 depicts a schematic diagram illustrating an embodiment of an exemplary on-vehicle navigation device 1 including a display system 20 according to the present invention. Reference numeral 11 denotes an external map data storage medium for storing map information, such as a DVD (digital versatile disc). From the map data storage medium, which is under control of a DVD control device 12, map information available is loaded into a memory portion 13, which may be an internal memory portion of the navigation device. Reference numeral 20 denotes a display system, which receives and processes input data from a variety of sources in order to display images to the user on a display device 24, which is a subunit of the display system 20. As one input to the display system 20, data from the memory portion 13 is loaded into a display data processing unit 21. Vehicle position data is provided by a vehicle position detector 14 and also provided to the display data processing unit 21. Vehicle position data, which can also be used as a basis for calculating a vehicle's speed, allows for selecting an appropriate subset of data loaded from the memory portion, which is of interest to a user at his current position and speed. The above mentioned two inputs to the display data processing unit 21, also denoted the data to be displayed, are processed by the display data processing unit 21, which provides respective output data to a priority determination unit 22 and an image generation unit 23, both being further subunits of the display system 20. It can be thought of a variety of other input data to the display data processing unit 21, for example traffic, weather, and road condition data. The selection and extent of additional input data to the display data processing unit 21 is irrelevant to the present invention.

The image generation unit 23 is adapted to generate image data from the output data of the display data processing unit 21. The image data is provided to the display device 24, which comprises adequate circuitry to receive the image data and to create an image on the display device 24 to be seen by a user of the navigation device 1. In a constant operating state, which is defined as a time period in which the output from the display data processing unit 21 is constant, the image data provided from the image generation unit 23 to display device 24 also results in only one image being presented to the user by the display device 24.

In the exemplary embodiment one of two priorities is assigned to the output data of the display data processing unit 21 by the priority determination unit 22. The priority corresponds to a relative importance of the information to be displayed for the user of the navigation device 1. An output signal indicative of an assigned priority, which is either high or low in the exemplary embodiment, is provided by the priority determination unit 22 to the image generation unit 23.

In the event of a change in the output data provided by the display data processing unit 21 from first output data to second output data, the screen output shown on the display device 24 to the user will change from a first image to a second image. The first image is created on the display device as a response to first image data from the image generation unit 23, the second image as a response to second image data. According to the present invention, the image generation unit 23 is adapted to provide control signals to the display device 24 that result in images being created on the display device that may deviate from both the first image and the second image. These control signals correspond to image states in a transition process between the first image data and the second image data. The transition process is controlled responsive to the output signal provided by the priority determination unit 22. For different priorities different methods for generating the image states of the transition process are implemented in the image generation unit 23.

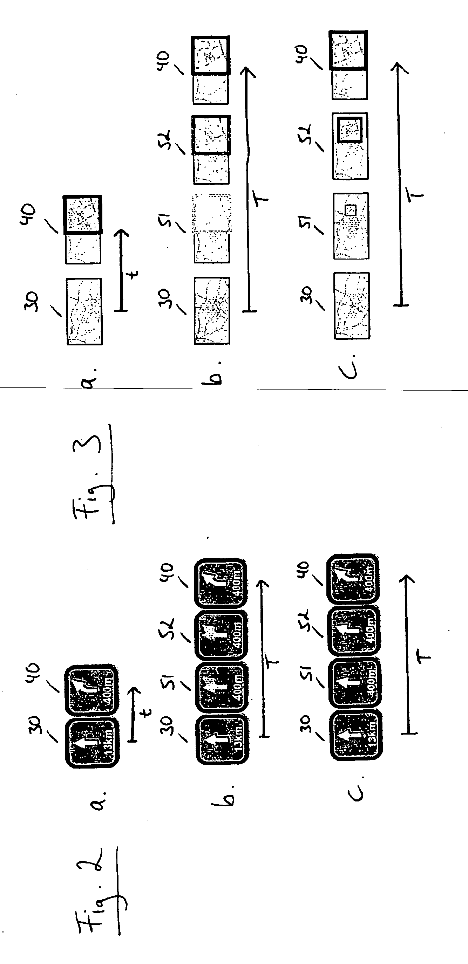

Figure 2 and Figure 3 show exemplary screen outputs provided over time to a user on the display device 24 in the course of a transition process from a first image to a second image. Figure 2 depicts maneuver guidance, as commonly encountered in navigation systems; Figure 3 depicts a split screen opening, which, in this example, superimposes a zoomed view of a section of a map image on half of the display screen. Figure 2a and Figure 3a show screen outputs, which are an example for a transition process of the present invention in case of a high priority. As shown in Figures 2a and 3a, a first image 30 on the display device 24 created from first image data is directly succeeded by a second image 40 on the display device 24 created from second image data, the transition process substantially corresponding to a classical image transition as know in the prior art. Figures 2b, 2c, 3b, and 3c each depict a series of images, wherein the first image 30 is respectively created from first image data by the display device 24 and the second or last image 40 is respectively created from second image data by the display device 24. The intermediate images are created by the display device 24 from intermediate image data received from the image generation unit 23, which correspond to intermediate image states 51, 52 in the transition process generated by the image generation unit 23. These depicted transition processes of Figs. 2b, 2c, 3b, and 3c comprising intermediate image states 51, 52 are examples of transition processes generated by the image generation unit 23 as a response to receiving a low priority signal from the priority determination unit 22.

For Figures 2b, 2c, 3b, and 3c subsequent image states 51, 52 for any given transition series are more similar in the eye of the beholder than the respective first and last image states of that series to each other. The transition from the first image 30 to the second image 40 is split up into several sub-transitions, which make the change from the first image 30 to the second image 40 less abrupt for the user. A key parameter for the perception of the user is the transition time between the last moment the first image 30 is presented on the display screen and the first moment the second image 40 is presented on the display screen. In combination with the number of intermediate states 51, 52, the transition time T, t determines how smooth the transition appears to the user. In a preferred embodiment, the image generation unit 23 may take more time between providing the image data corresponding to the first image 30 to the display device and providing the image data corresponding to the last image 40 to the display device in a low priority case than in a high priority case. This is illustrated by comparing, for example, transition time t shown in Figure 2a (high priority) and transition time T shown in Figure 2b (low priority), when assuming a constant transition time interval between the presentation of subsequent images. Low priority information is therefore less likely to distract the user than high priority information as a matter of not exciting the user's gaze reflex. In an embodiment, the transition time in a low priority case T may be in the range between 2s and 10s and the transition time in a high priority case t may be in the range between 0s and 1s.

The image generation unit 23 generates all image states from first output data from the display data processing unit 21, second output data from the display data processing unit 21, and the priority signal from the priority determination unit 22. Various methods may be employed by the image generation unit 23 to generate the intermediate image states of the transition process. These methods may include, but are not limited to cross-fading transition (Figure 2b and Figure 3b) and morphing shapes transition (Figure 2c and Figure 3c).

In a cross-fading transition process a first image 30 is overlayed by a second image 40, successively increasing the transparency of the first image 30 and successively decreasing the transparency of the second image 40, thereby creating a plurality of image states 51, 52 for the transition process. As depicted in the left most part of Figure 2b and 3b respectively, the first image state of the transition process is the first image 30, i.e. the first image has a transparency level of 0, which corresponds to being fully visible, whereas the second image 40 has a transparency level of 1. Successively the transparency level of the first image 30 is increased and the transparency level of the second image 40 is decreased, until the first image 30 has a transparency level of 1 and the second image 40 has a transparency level of 0, which results in the overlayed image being the second image 40, which is depicted in Figure 2b and 3b as the last image state on the far right side respectively.

Whereas successive adjustments to the intensities and an overlaying of the two images on a pixel by pixel level allows for a smooth transition with the cross-fading method, in a morphing shapes transition process the intermediate states 51, 52 are given an image structure deviating from both the first image 30 and the second image 40. High level features or structural elements of the images are generated in various stages for the intermediate image states 51, 52, such that the first image 30 morphs into the second image 40 in the transition process. In the example of Figure 2c the first image 30 shows a straight arrow pointing upwards as an image feature whereas the second image 40, i.e. the last state of the transition process, shows an arrow whose upper part is bent to the right at an approximately 45° angle. For intermediate image states 51, 52 additional arrow shapes are generated by the image generation unit 23, which have the upper part of the arrow bent at various angles between 0° and 45°. The image transition is therefore perceived by a user as a smooth bending of the arrow image feature. In Figure 3c the zoomed view of a portion of a map is generated in different sizes by the image generation unit 23. For subsequent image states 51, 52 the zoomed portion is superimposed on the first image 30 in increasing sizes, such that in the last state the zoomed portion takes up half of the displayed image, which corresponds to the second image 40 to be displayed. In this example, the image transition process realizes a growing of the superimposed image structure from the first image 30 to the second image 40.

In an embodiment of the present invention the output signal from the priority determination unit 22, indicative of the priority of the data to be displayed in the second image 40, is used as a basis for the decision by the image generation unit 23, as to which method will be employed to generate the image states 51, 52 of the transition process. As in the example of Figure 2, the priority determination unit 22 may decide what priority the new information "slight right in 400m" has and the image generation unit 23 will generate the transition process accordingly. It can also be thought of cases when the priorities of both the first image 30 and the second image 40 are taken into account. An example would be that an image A has low priority assigned to it, an image B has high priority assigned to it, and an image C being similar to image B has high priority assigned to it as well. The transition from image A to image B is generated in a way that the user's attention is drawn to the new information, whereas the transition from image B to image C is generated as a soft, non-distracting screen output change, since the user's attention has already been drawn to similar information.

An optional feature of the present invention is implementing an input interface 15 in connection with the invention, which is shown in the schematic diagram of the embodiment of Figure 1. Input interface 15 allows the user to have an influence on the priority assignments generated by priority determination unit 22. In an exemplary embodiment of the present invention, priority determination unit 22 may have a memory device for storing priority assignments for certain categories of data to be displayed. For example one of such a category may be "maneuver guidance in 300m to 1000m", which would be applicable to the data displayed in the second image 40 in Figure 2. In the memory device there may be stored a look-up table indicating a priority for each such category. Data provided from the input interface 15 may be used by the priority determination unit 22 to change the look-up table according to the user's preferences.

The creation of a priority from the data to be displayed can be performed in many ways, as will be apparent to a person skilled in the art. An assignment of a data category to the data to be displayed may be implemented in the display data processing unit 21 or the priority determination unit 22, each data category having a priority assigned to it. Alternatively, the priority determination unit 22 may perform an algorithm on the output data from the display data processing unit 21 without categorization to determine the priority of the data to be displayed. In this case the user may have the option to set parameters of that algorithm through the input interface 15.

For carrying out above described operations the display data processing unit 21, the priority determination unit 22, and the image generation unit 23 may all be built as separate structures, each comprising a memory device, a processing device, input, output, and synchronization circuitry. Alternatively, the functionality of said units may be implemented in a software architecture embedded into the display device. As is apparent to a person skilled in the art, many implementation solutions are possible. The invention is not limited by a particular implementation, but as defined in the claims.

The invention is also not limited to the case of only two priorities that can be assigned to the output data from the display data processing unit. Various priorities may, for example, correspond to respective transition time periods of the transition process as defined above. Various priorities may in another embodiment indicate to the image generation unit 23 to employ different methods of generating the intermediate image states of the transition process, e.g. cross-fading transition and morphing shapes transition may be employed as a response to different priorities.

Also, the image generation unit 23 may generate in a further embodiment of the invention additional image states in the case of a high priority as opposed to the only two images depicted in Figure 2a and 3a. An intermediate state corresponding to an image of one colour, for example black, may be generated. The similarity between this intermediate image and the first image as well as the second image is smaller than between the first and the second image. Therefore the transition process comprises two abrupt sub-transitions, each of them being even more distracting to the user than a mere change from the first image to the second image. Alternatively or additionally, the second image data may be altered by the image generation unit in a way that additional structural features, for example a frame around a portion of the image, are superimposed on the image. This alteration increases the deviation of the second image from the first image, resulting in the change being more obvious for the user triggering the gaze reflex and attracting the user's attention. The second image including the superimposed feature and the original second image may alternate for an extended period of time in order to catch the user's attention through a blinking effect. The same goal may be reached by repeatedly alternating the colour of the superimposed structural feature for an extended period of time. In an embodiment, the blinking effect may be attained by keeping a screen output (e.g. second image including the superimposed features, original second image) constant for a period between 0.2s and 1s before transitioning to the other screen output (e.g. original second image, second image including the superimposed features). More examples of additional image states of the transition process will be apparent to a person skilled in the art. According to the present invention, the image states of the transition process will be generated by the image generation unit 23 responsive to the output signal from the priority determination unit 22 indicative of one of a plurality of priorities.

## Claims

1. An on-vehicle display system (20), comprising:
a display device (24) adapted to display at least one image,
a display data processing unit (21) adapted to process data to be displayed on said display device (24) and to provide corresponding output data,
an image generation unit (23) adapted to generate image data from said output data provided by said display data processing unit (21) and to provide said image data to said display device (24) for displaying an image, and
a priority determination unit (22) adapted to assign one of at least two priorities to said output data from said display data processing unit (21) and to provide an output signal to said image generation unit (23) indicative of said assigned priority,
wherein said image generation unit (23) is adapted to generate first image data for being displayed in a first image (30) on said display device, as a response to first output data from said display data processing unit (21), and second image data for being displayed in a second image (40) on said display device, as a response to succeeding second output data from said display data processing unit (21), including a transition process for generating said second image data succeeding said first image data, said transition process being set to have a defined transition time period (T, t), said transition time period (T, t) being determined by said image generation unit (23) responsive to said output signal from said priority determination unit (22).

2. The on-vehicle display system according to claim 1, wherein the transition time period for a higher priority (t) is shorter than the transition time period for a lower priority (T).

3. The on-vehicle display system according to claim 1 or 2, wherein said transition process comprises at least two succeeding image states with a first image state comprising said first image data and a last image state comprising said second image data, wherein said transition time period (T, t) is the time period between a last instant that said first image state is provided to said display device (24) and a first instant that said last image state is provided to said display device (24).

4. The on-vehicle display system according to claim 3, wherein at least one intermediate image state (51, 52) of said transition process between said first image state and said last image state is generated by said image generation unit (23), as a response to said output signal from said priority determination unit (22) being indicative of a low priority, with one of said image states of said transition process and a subsequent one of said image states being more similar to each other than said first image state and said last image state to each other.

5. The on-vehicle display system according to any of the claims 1 to 4, wherein said image generation unit (23) generates for said transition process image data derived from said first image data being superimposed with said second image data, with a transparency level of said first image data increasing and a transparency level of said second image data decreasing successively in said transition process.

6. The on-vehicle display system according to claim 5, wherein said transparency level of said first image data has a value of 0 in the beginning of said transition process and a value of 1 at the end of said transition process and said transparency level of said second image data has a value of 1 in the beginning of said transition process and a value of 0 at the end of said transition process.

7. The on-vehicle display system according to any of the claims 1 to 4, wherein intermediate image data is generated by said image generation unit (23) for said transition process, such that features of said first image morph into features of said second image in the transition process.

8. The on-vehicle display system according to any of the preceding claims, wherein additional image data is generated by said image generation unit (23) for being displayed between said first image (30) and said second image (40) on said display device (24), said additional image data deviating significantly from both said first image (30) as well as said second image (40), as a response to said output signal from said priority determination unit (22) being indicative of a high priority.

9. The on-vehicle display system according to any of the preceding claims, wherein said second image data is altered by said image generation unit (23), such that said first image data and said altered second image data are less similar than said first image data and said second image data, as a response to said output signal from said priority determination unit (22) being indicative of a high priority.

10. The on-vehicle display system according to any of the preceding claims, wherein said priority determination unit (22) comprises an internal memory unit adapted to store at least one priority assignment for said output data from said display data processing unit (21).

11. The on-vehicle display system according to claim 10, additionally comprising a user input interface (15) adapted to receive at least one priority assignment from a user and to provide said at least one priority assignment to said priority determination unit (22) for storing in said internal memory unit.

12. The on-vehicle display system according to any of the preceding claims, wherein said transition time period (T, t) is in the range of 2s to 10s for low priorities and in the range of 0s to 1s for high priorities.

13. An on-vehicle navigation device (1), including an on-vehicle display system (20) according to any of the claims 1 to 12.

## Patentansprüche

1. Anzeigesystem zur Verwendung in einem Fahrzeug, aufweisend:
eine Anzeigeeinrichtung (24), die eingerichtet ist, mindestens ein Bild anzuzeigen,
eine Anzeigedatenverarbeitungseinheit (21), die eingerichtet ist, auf der Anzeigeeinrichtung (24) anzuzeigende Daten zu verarbeiten und entsprechende Ausgabedaten bereitzustellen,
eine Bilderzeugungseinheit (23), die eingerichtet ist, Bilddaten aus den von der Anzeigedatenverarbeitungseinrichtung (21) bereitgestellten Ausgabedaten zu erzeugen und die Bilddaten der Anzeigeeinrichtung (24) zum Anzeigen eines Bildes bereitzustellen, und
eine Prioritätsbestimmungseinheit (22), die eingerichtet ist, den Ausgabedaten von der Anzeigedatenverarbeitungseinheit (21) eine von mindestens zwei Prioritätsstufen zuzuordnen und ein Ausgabesignal an die Bilderzeugungseinheit (23) bereitzustellen, das die zugeordnete Prioritätsstufe anzeigt,
wobei die Bilderzeugungseinheit (23) eingerichtet ist, erste Bilddaten zur Anzeige in einem ersten Bild (30) auf der Anzeigeeinrichtung als Reaktion auf erste Ausgabedaten von der Anzeigedatenverarbeitungseinheit (21) zu erzeugen und zweite Bilddaten zur Anzeige in einem zweiten Bild (40) auf der Anzeigeeinrichtung als Reaktion auf nachfolgende zweite Ausgabedaten von der Anzeigedatenverarbeitungseinheit (21) zu erzeugen, inklusive eines Übergangsprozesses zum Erzeugen der zweiten Bilddaten, die den ersten Bilddaten nachfolgen, wobei der Übergangsprozess so angesetzt ist, dass er eine definierte Übergangszeitdauer (T, t) hat, wobei die Übergangszeitdauer (T, t) von der Bilderzeugungseinheit (23) in Reaktion auf das Ausgabesignal von der Prioritätsbestimmungseinheit (22) festgesetzt wird.

2. Anzeigesystem zur Verwendung in einem Fahrzeug nach Anspruch 1, wobei die Übergangszeitdauer für eine höhere Prioritätsstufe (t) kürzer als die Übergangszeitdauer für eine niedrigere Prioritätsstufe (T) ist.

3. Anzeigesystem zur Verwendung in einem Fahrzeug nach Anspruch 1 oder 2, wobei der Übergangsprozess mindestens zwei aufeinanderfolgende Bildzustände aufweist, wobei ein erster Bildzustand die ersten Bilddaten aufweist und ein letzter Bildzustand die zweiten Bilddaten aufweist, wobei die Übergangszeitdauer (T, t) die Zeitdauer zwischen einem letzten Moment, an dem der erste Bildzustand der Anzeigeeinrichtung (24) bereitgestellt ist, und einem ersten Moment ist, an dem der letzte Bildzustand der Anzeigeeinrichtung bereitgestellt ist.

4. Anzeigesystem zur Verwendung in einem Fahrzeug nach Anspruch 3, wobei als Reaktion darauf, dass das Ausgabesignal von der Prioritätsbestimmungseinheit (22) eine niedrige Priorität anzeigt, mindestens ein Zwischenbildzustand (51, 52) des Übergangsprozesses zwischen dem ersten Bildzustand und dem letzten Bildzustand von der Bilderzeugungseinheit (23) erzeugt wird, wobei einer der Bildzustände des Übergangsprozesses und ein anschließender der Bildzustände einander ähnlicher sind als der erste Bildzustand und der letzte Bildzustand zueinander.

5. Anzeigesystem zur Verwendung in einem Fahrzeug nach einem der Ansprüche 1 bis 4, wobei die Bilderzeugungseinheit (23) Bilddaten für den Übergangsprozess erzeugt, die von einer Überlagerung der ersten Bilddaten mit den zweiten Bilddaten abgeleitet sind, wobei ein Transparenzniveau der ersten Bilddaten sukzessive in dem Übergangsprozess steigt und ein Transparenzniveau der zweiten Bilddaten sukzessive in dem Übergangsprozess sinkt.

6. Anzeigesystem zur Verwendung in einem Fahrzeug nach Anspruch 5, wobei das Transparenzniveau der ersten Bilddaten einen Wert von 0 zu Beginn des Übergangsprozesses und einen Wert von 1 zum Ende des Übergangsprozesses hat und wobei das Transparenzniveau der zweiten Bilddaten einen Wert von 1 zu Beginn des Übergangsprozesses und einen Wert von 0 zum Ende des Übergangsprozesses hat.

7. Anzeigesystem zur Verwendung in einem Fahrzeug nach einem der Ansprüche 1 bis 4, wobei Zwischenbilddaten von der Bilderzeugungseinheit (23) für den Übergangsprozess erzeugt werden, so dass sich Merkmale des ersten Bildes in Merkmale des zweiten Bildes in dem Übergangsprozess verwandeln bzw. morphen.

8. Anzeigesystem zur Verwendung in einem Fahrzeug nach einem der vorhergehenden Ansprüche, wobei zusätzliche Bilddaten von der Bilderzeugungseinheit (23) zur Anzeige zwischen dem ersten Bild (30) und dem zweiten Bild (40) auf der Anzeigeeinrichtung (24) erzeugt werden, wobei die zusätzlichen Bilddaten sowohl von dem ersten Bild (30) als auch von dem zweiten Bild (40) signifikant abweichen als Reaktion darauf, dass das Ausgabesignal von der Prioritätsbestimmungseinheit (22) eine hohe Prioritätsstufe anzeigt.

9. Anzeigesystem zur Verwendung in einem Fahrzeug nach einem der vorhergehenden Ansprüche, wobei die zweiten Bilddaten von der Bilderzeugungseinheit (23) als Reaktion darauf, dass das Ausgabesignal von der Prioritätsbestimmungseinheit (22) eine hohe Prioritätsstufe anzeigt, abgeändert werden, so dass die ersten Bilddaten und die abgeänderten zweiten Bilddaten weniger ähnlich sind als die ersten Bilddaten und die zweiten Bilddaten.

10. Anzeigesystem zur Verwendung in einem Fahrzeug nach einem der vorhergehenden Ansprüche, wobei die Prioritätsbestimmungseinheit (22) eine interne Speichereinheit aufweist, die eingerichtet ist, mindestens eine Prioritätszuweisung für die Ausgabedaten von der Anzeigedatenverarbeitungseinheit (21) zu speichern.

11. Anzeigesystem zur Verwendung in einem Fahrzeug nach Anspruch 10, welches zusätzlich eine Benutzereingabeschnittstelle (15) aufweist, die eingerichtet ist, mindestens eine Prioritätszuweisung von einem Benutzer zu empfangen und die mindestens eine Prioritätszuweisung der Prioritätsbestimmungseinheit (22) zum Speichern in der internen Speichereinheit bereitzustellen.

12. Anzeigesystem zur Verwendung in einem Fahrzeug nach einem der vorhergehenden Ansprüche, wobei die Übergangszeitdauer (T, t) in dem Bereich von 2 Sekunden bis 10 Sekunden für niedrige Prioritätsstufen und in dem Bereich von 0 Sekunden bis 1 Sekunde für hohe Prioritätsstufen ist.

13. Navigationsgerät (1) zur Verwendung in einem Fahrzeug, aufweisend ein Anzeigesystem (20) zur Verwendung in einem Fahrzeug nach einem der Ansprüche 1 bis 12.

## Revendications

1. Système d'affichage embarqué (20) sur véhicule, comportant :
un dispositif affichage (24) conçu pour afficher au moins une image,
une unité de traitement (21) de données d'affichage conçue pour traiter des données à afficher sur ledit dispositif d'affichage (24) et délivrer des données de sortie correspondantes,
une unité de production (23) d'image conçue pour produire des données d'image à partir desdites données de sortie délivrées par ladite unité de traitement (21) de données d'affichage et pour fournir lesdites données d'image audit dispositif d'affichage (24) pour afficher une image, et
une unité de détermination de priorité (22) conçue pour attribuer l'une d'au moins deux priorités auxdites données de sortie de ladite unité de traitement (21) de données d'affichage et pour fournir à ladite unité de production (23) d'image un signal de sortie indiquant ladite priorité attribuée,
ladite unité de production (23) d'image étant conçue pour produire des données de première image destinées à être affichées sur une première image (30) sur ledit dispositif d'affichage, en réponse à des premières données de sortie de ladite unité de traitement (21) de données d'affichage, et des données de seconde image destinées à être affichées sur une seconde image (40) sur ledit dispositif d'affichage, en réponse à des secondes données ultérieures de sortie de ladite unité de traitement (21) de données d'affichage, comprenant un processus de transition pour produire lesdites données de seconde image à la suite desdites données de première image, ledit processus de transition étant établi de manière à avoir une période de transition définie (T, t), ladite période de transition (T, t) étant déterminée par ladite unité de production (23) d'image en réponse audit signal de sortie de ladite unité de détermination de priorité (22).

2. Système d'affichage embarqué sur véhicule selon la revendication 1, dans lequel la période de transition pour une priorité supérieure (t) est plus courte que la période de transition pour une priorité inférieure (T).

3. Système d'affichage embarqué sur véhicule selon la revendication 1 ou 2, dans lequel ledit processus de transition comprend au moins deux états successifs d'image, un premier état d'image comprenant lesdites données de première image et un dernier état d'image comprenant lesdites données de seconde image, ladite période de transition (T, t) étant le laps de temps entre un dernier instant où ledit premier état d'image est fourni audit dispositif d'affichage (24) et un premier instant où ledit dernier état d'image est fourni audit dispositif d'affichage (24).

4. Système d'affichage embarqué sur véhicule selon la revendication 3, dans lequel au moins un état intermédiaire (51, 52) d'image dudit processus de transition entre ledit premier état d'image et ledit dernier état d'image est généré par ladite unité de production (23) d'image en réponse audit signal de sortie de ladite unité de détermination de priorité (22) indiquant une priorité basse, l'un desdits états d'image dudit processus de transition et l'un, ultérieur, desdits états d'image étant plus semblables l'un à l'autre que ne le sont l'un à l'autre ledit premier état d'image et ledit dernier état d'image.

5. Système d'affichage embarqué sur véhicule selon l'une quelconque des revendications 1 à 4, dans lequel ladite unité de production (23) d'image produit, pendant ledit processus de transition, des données d'image dérivées de la superposition desdites données de première image auxdites données de seconde image, un niveau de transparence desdites données de première image augmentant et un niveau de transparence desdites données de seconde image diminuant successivement lors dudit processus de transition.

6. Système d'affichage embarqué sur véhicule selon la revendication 5, dans lequel ledit niveau de transparence desdites données de première image a une valeur de 0 au début dudit processus de transition et une valeur de 1 à la fin dudit processus de transition et ledit niveau de transparence desdites données de seconde image à une valeur de 1 au début dudit processus de transition et une valeur de 0 à la fin dudit processus de transition.

7. Système d'affichage embarqué sur véhicule selon l'une quelconque des revendications 1 à 4, dans lequel des données intermédiaires d'image sont produites par ladite unité de production (23) d'image pendant ledit processus de transition, de façon que des détails de ladite première image se transforment en détails de ladite seconde image lors du processus de transition.

8. Système d'affichage embarqué sur véhicule selon l'une quelconque des revendications précédentes, dans lequel des données supplémentaires d'image sont produites par ladite unité de production (23) d'image pour être affichées sur ledit dispositif d'affichage (24) entre ladite première image (30) et ladite seconde image (40), lesdites données supplémentaires d'image différant notablement de ladite première image (30) ainsi que de ladite seconde image (40), en réponse à l'indication d'une priorité haute par ledit signal de sortie de ladite unité de détermination de priorité (22)

9. Système d'affichage embarqué sur véhicule selon l'une quelconque des revendications précédentes, dans lequel lesdites données de seconde image sont modifiées par ladite unité de production (23) d'image, de façon que lesdites données de première image et lesdites données de seconde image modifiées soient moins semblables auxdites données de première image et données de seconde image, en réponse à l'indication d'une priorité basse par ledit signal de sortie de ladite unité de détermination de priorité (22).

10. Système d'affichage embarqué sur véhicule selon l'une quelconque des revendications précédentes, dans lequel ladite unité de détermination de priorité (22) comprend une mémoire interne conçue pour mémoriser au moins une attribution de priorité pour lesdites données de sortie de ladite unité de traitement (21) de données d'affichage.

11. Système d'affichage embarqué sur véhicule selon la revendication 10, comportant en outre une interface utilisateur d'entrée (15) conçue pour recevoir d'un utilisateur au moins une attribution de priorité et pour fournir ladite au moins une attribution de priorité à ladite unité de détermination de priorité (22) en vue de sa mémorisation dans ladite mémoire interne.

12. Système d'affichage embarqué sur véhicule selon l'une quelconque des revendications précédentes, dans lequel ladite période de transition (T, t) dure de 2 s à 10 s pour des priorités basses et de 0 s à 1 s pour des priorités hautes.

13. Dispositif de navigation embarqué (1) sur véhicule, comportant un système d'affichage embarqué (20) sur véhicule selon l'une quelconque des revendications 1 à 12.
